# EUROPEAN PATENT APPLICATION

(11) **EP 4 727 011 A1**
(43) Date of publication of application: **15.04.2026**
(21) Application number: 25207463.8
(22) Date of filing: 08.10.2025
(51) Int. Cl.: H02S 50/10, H02S 50/15

(54) **DETECTION AND EVALUATION SYSTEM FOR SOLAR POWER GENERATION MODULE**

(30) Priority: 09.10.2024 TW 113138410
(71) Applicant: Optimal Power Co., Ltd., 106652 Taipei City (TW)
(72) Inventor: Hsu, Shuo-Hsien, 106652 Taipei City (TW)
(74) Representative: Bals & Vogel Patentanwälte PartGmbB

(57) **Abstract**

The present disclosure provides a detection and evaluation system (100) for a solar power generation module (S), including a sensing device (1), a processing device (2), and a display device (3). The sensing device (1) is configured to detect a plurality of solar panels (S1) of the solar power generation module (S) to obtain a line information set and a panel image capture information set of each of the solar panels (S1). The processing device (2) is coupled to the sensing device (1), and is configured to evaluate a panel defect result for each of the solar panels (S1) based on the line information set and a panel scanning image capture information set, and generate a plurality of visual detection classification interfaces (4) based on the panel defect result, the line information set, and a panel scanning image information set. The display device (3) is coupled to the processing device (2) to display the visual detection classification interfaces (4).

## Description

### BACKGROUND OF THE INVENTION

### 1. Field of the Invention

The present disclosure relates to a detection and evaluation system for a solar power generation module, and in particular, to a detection and evaluation system that visually presents a state of a solar power generation module on a map.

### 2. Description of the Related Art

Compared with conventional fossil fuel power generation, clean energy has characteristics of low or zero carbon emissions, which helps to slow down the effect of global warming and is a major trend in global energy development. One of the most common clean energy sources is solar power generation, which is to set up large solar power plants which include a large number of solar panels to convert sunlight directly into electrical energy through the photovoltaic effect.

However, the solar power plants are located in vast areas and typically have at least tens of thousands of solar panels installed in open and well-lit natural environments and susceptible to various external factors (for example, bird droppings and dirt on the panels, or trampling cracks caused by maintenance workers during inspections). As a result, solar panels are often damaged for unknown reasons, resulting in problems such as poor overall power generation efficiency and difficulty in equipment maintenance.

### BRIEF SUMMARY OF THE INVENTION

A main object of the present disclosure is to provide a detection and evaluation system for a solar power generation module, including a sensing device, a processing device, and a display device. The sensing device is configured to detect a plurality of solar panels of the solar power generation module to obtain a line information set and a panel image capture information set of each of the solar panels. The processing device is coupled to the sensing device, and is configured to evaluate a panel defect result of each solar panel based on the line information set and a panel scanning image capture information set, and generate a plurality of visual detection classification interfaces based on the panel defect result, the line information set, and a panel scanning image information set. The display device is coupled to the processing device, and is configured to display the visual detection classification interfaces.

Further, the visual detection classification interfaces include a site environment map, a plurality of panel image layers, and a panel status quantification information set, and the panel image layers and the panel status quantification information set are superimposed and displayed on the site environment map.

Further, the panel status quantification information set includes a panel uniformity rating indicator. The panel uniformity rating indicator may be displayed through a first visualization score rating chart. The first visualization score rating chart has a uniformity score scale bar, a first main cursor, a second main cursor, a uniformity score scale display region, and a plurality of panel quantity layer display regions. The first main cursor and the second main cursor are movably arranged on the uniformity score scale bar. The uniformity score scale display region is arranged adjacent to the uniformity score scale bar to display a first uniformity score scale corresponding to the first main cursor and a second uniformity score scale corresponding to the second main cursor. The panel quantity layer regions may be displayed between the first main cursor and the second main cursor and are located on the uniformity score scale bar.

Further, the panel uniformity rating indicator is displayed through a second visualization score rating chart, the second visualization score rating chart is a bar chart having a uniformity score horizontal axis scale, a panel quantity vertical axis scale, and a plurality of uniformity bar layers, and each of the uniformity bar layers is configured to represent each panel quantity vertical axis scale corresponding to each uniformity score horizontal axis scale.

Further, after one of the uniformity bar layers and the site environment map are clicked and selected in sequence, the processing device superimposes a plurality of uniformity score color layer markers on a portion of the panel image layers based on a plurality of pieces of corresponding uniformity position information, and displays the uniformity score color layer markers through the display device.

Further, the panel status quantification information set includes a plurality of defect color layer markers, a plurality of pieces of defect category information, and a plurality of pieces of defect position information, each of the defect color layer markers correspondingly represents each of the defect category information, and each defect color layer marker is selectively superimposed on the panel image layers based on the defect position information.

Further, each defect category information has a defect rating indicator that is displayed through a third visualization score rating chart, the third visualization score rating chart has a defect score scale bar, a first sub-cursor, a second sub-cursor, a defect score scale display region, and a plurality of panel defect quantity layer regions, the first sub-cursor and the second sub-cursor are movably arranged on the score scale bar, a defect score display region is arranged adjacent to the score scale bar to display a first sub-score scale corresponding to the first sub-cursor and a second sub-score scale corresponding to the second sub-cursor, and the panel defect quantity layer regions are displayed between the first sub-cursor and the second sub-cursor and are located on the defect score scale bar.

Further, each defect color layer marker located in the site environment map is clicked and selected, each of the panel image layers on which the defect color layer marker is superimposed is displayed on the display device as a first magnified state layer, and the panel status quantification information set is displayed on the display device.

Further, after the first magnified state layer is clicked and selected, a second magnified state layer is further displayed on the display device, and each defect color layer marker is superimposed on the second magnified state layer.

Further, the defect category information includes crack information, backsheet scratch information, line short-circuit information, electrode finger defect information, dirt defect information, dark shadow region information, bright region information, activated bypass diode information, dark matter bleed information, on-panel foreign matter information, and panel edge shadow information.

Further, the defect category information is displayed as a defect percentage chart of each defect category information in total defects through a defect category quantity pie chart, each defect classification interface of each defect percentage chart is clicked and then the site environment map is clicked, and each defect color layer marker is correspondingly superimposed on the panel image layer based on the panel defect result and the defect position information.

Further, the line information set includes a current and voltage measurement parameter.

Further, the panel status quantification information set further includes a solar panel sensing success rate indicator, and a sensing success rate parameter, a sensing failure rate parameter, and a non-response rate parameter are displayed in a sensing success rate pie chart.

Further, the panel status quantification information set further includes a defect degree indicator, and a non-defect ratio parameter, a minor defect ratio parameter, and a major defect ratio parameter are displayed in a defect degree pie chart.

Further, the processing device includes a map positioning tool for extracting the site environment map of a position of the solar power generation module, the panel image layers, and the panel status quantification information.

Further, the visual detection classification interfaces further include a plurality of pieces of panel region number information and a plurality of pieces of panel number information, and each of the plurality of pieces of panel region information and each of the panel number information are visually superimposed and displayed on the site environment map.

Further, the visual detection classification interfaces have a plurality of visual position markers, the visual position markers are correspondingly superimposed on the panel image layers based on a plurality of pieces of panel position information in the panel status quantification information set, the visual position markers include at least the uniformity score color layer markers and the defect color layer markers, and the panel position information includes at least the uniformity position information and the defect position information.

Further, the processing device has a zoom function module to adjust a marker area of each of the visual position markers superimposed on the panel image layers.

Further, the processing device has an artificial intelligence classification device. The artificial intelligence classification device is configured to classify defects based on the panel defect result and obtain the defect category information.

Therefore, through the detection and evaluation system for a solar power generation module provided by the present disclosure, all information of all sites may be stored, a location of each site can be clearly marked on a map, a state of each solar panel on each site can be visually displayed through images and superimposed on the map through quantitative calculation, so as to quickly know a position and various quantitative information (including line information, defect conditions, and the like) of each solar panel. In addition, through the detection and evaluation system of the present disclosure, all quantized data can be integrated, and then a position and a damage cause of a solar panel that needs to be repaired are marked based on conditions set by a user, so as to quickly reach a specific solar panel and perform a correct maintenance procedure, thereby reducing maintenance operation costs and improving overall power generation efficiency of the site.

### BRIEF DESCRIPTION OF THE DRAWINGS

FIG. 1 is a schematic block diagram of a detection and evaluation system for a solar power generation module according to the present disclosure.
FIG. 2 is a schematic front view (I) of a usage state of a detection and evaluation system for a solar power generation module according to the present disclosure.
FIG. 3 is a schematic front view (II) of a usage state of a detection and evaluation system for a solar power generation module according to the present disclosure.
FIG. 4 is a schematic front view (III) of a usage state of a detection and evaluation system for a solar power generation module according to the present disclosure.
FIG. 5A is a schematic front view (IV) of a usage state of a detection and evaluation system for a solar power generation module according to the present disclosure.
FIG. 5B is a schematic front view (V) of a usage state of a detection and evaluation system for a solar power generation module according to the present disclosure.
FIG. 5C is a schematic front view (VI) of a usage state of a detection and evaluation system for a solar power generation module according to the present disclosure.
FIG. 6A is a schematic front view (VII) of a usage state of a detection and evaluation system for a solar power generation module according to the present disclosure.
FIG. 6B is a partial schematic enlarged view of FIG. 6A.
FIG. 6C is a schematic front view (VIII) of a usage state of a detection and evaluation system for a solar power generation module according to the present disclosure.
FIG. 6D is a schematic front view (IX) of a usage state of a detection and evaluation system for a solar power generation module according to the present disclosure.
FIG. 6E is a schematic front view (X) of a usage state of a detection and evaluation system for a solar power generation module according to the present disclosure.
FIG. 7A is a schematic front view (XI) of a usage state of a detection and evaluation system for a solar power generation module according to the present disclosure.
FIG. 7B is a schematic front view (XII) of a usage state of a detection and evaluation system for a solar power generation module according to the present disclosure.
FIG. 7C is a schematic front view (XIII) of a usage state of a detection and evaluation system for a solar power generation module according to the present disclosure.
FIG. 7D is a partial schematic enlarged view of FIG. 7C.
FIG. 7E is a schematic front view (XIV) of a usage state of a detection and evaluation system for a solar power generation module according to the present disclosure.
FIG. 8A is a schematic front view (XV) of a usage state of a detection and evaluation system for a solar power generation module according to the present disclosure.
FIG. 8B is a schematic front view (XVI) of a usage state of a detection and evaluation system for a solar power generation module according to the present disclosure.
FIG. 9A is a schematic front view (XVII) of a usage state of a detection and evaluation system for a solar power generation module according to the present disclosure.
FIG. 9B is a schematic front view (XVIII) of a usage state of a detection and evaluation system for a solar power generation module according to the present disclosure.
FIG. 9C is a schematic front view (XIX) of a usage state of a detection and evaluation system for a solar power generation module according to the present disclosure.
FIG. 9D is a schematic front view (XX) of a usage state of a detection and evaluation system for a solar power generation module according to the present disclosure.

### DETAILED DESCRIPTION OF THE INVENTION

The original figures in this application contain color information. However, for the purposes of this application, all figures are presented in black and white. Therefore, the figures are displayed in black and white herein, while the original color information is maintained in the specification for reference where necessary, so as to preserve consistency and completeness in the technical disclosure.

The detailed description and technical content of the present disclosure are described below with reference to the figures. For ease of description and easy understanding of the technical content of the present disclosure, some contents are not necessarily drawn to actual scale. Such proportions and shapes are not intended to limit the scope of the present disclosure, which is described herein in advance.

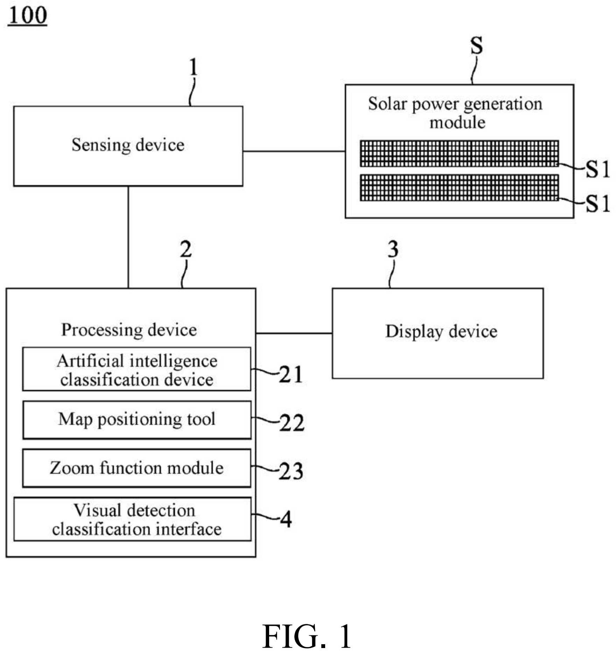

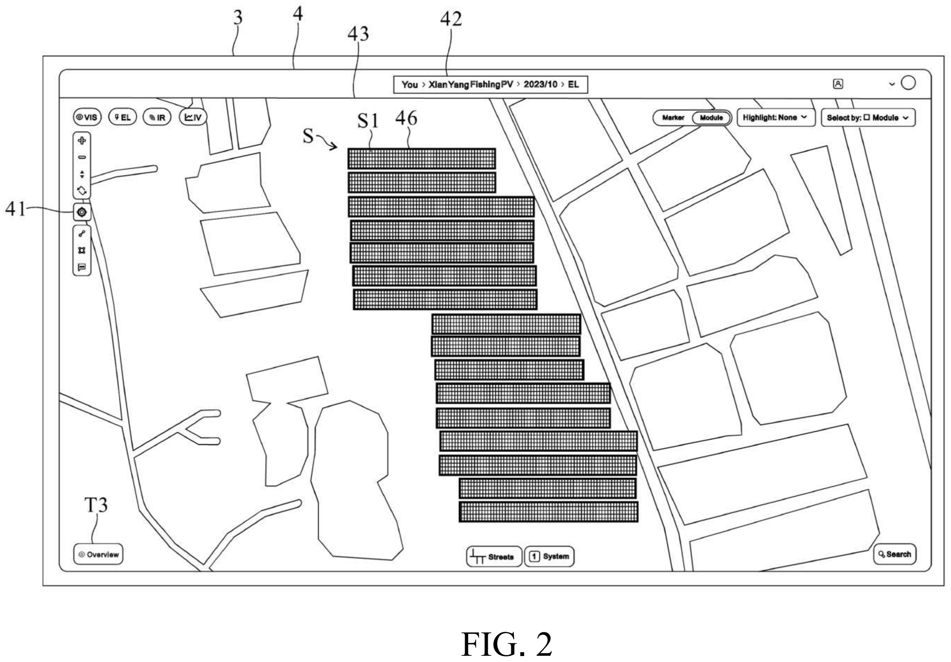

A specific embodiment is used for description below based on the present disclosure with reference to the accompanying drawings. Referring to FIG. 1 and FIG. 2, a detection and evaluation system 100 for a solar power generation module S of the present disclosure includes a sensing device 1, a processing device 2, and a display device 3. The sensing device 1 is configured to detect a plurality of solar panels S1 of the solar power generation module S, to obtain a panel image capture information set and a line information set of each of the solar panels S1. The processing device 2 is coupled to the sensing device 1, and is configured to evaluate a panel defect result of each solar panel S1 based on the line information set and a panel scanning image capture information set, and generate a plurality of visual detection classification interfaces 4 based on the panel defect result, the panel image capture information set, and the line information set. The display device 3 is coupled to the processing device 2 to display the visual detection classification interfaces 4.

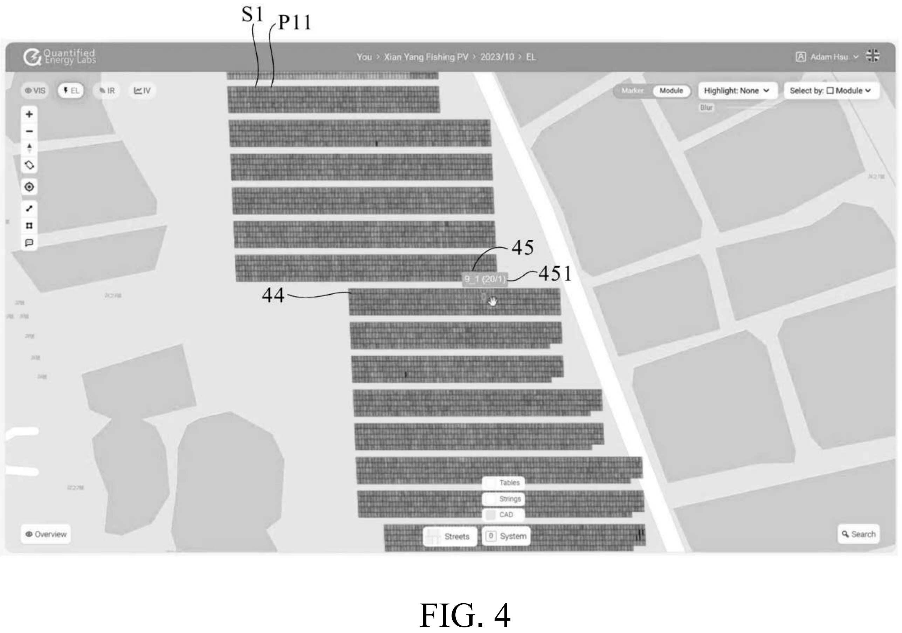

In this embodiment, referring to FIG. 4, the panel image capture information set of each solar panel S1 is an electroluminescence (EL) panel image P11 of each solar panel S1. The EL panel image P11 refers to an image captured by detecting the solar panel S1 through an EL technology. The line information set of each solar panel S1 includes at least a current and voltage measurement parameter, and information such as brightness, a defect area, and a shape of each solar panel S1 obtained through analysis of the EL panel image P11.

The processing device 2 has at least an artificial intelligence classification device 21, a map positioning tool 22, a zoom function module 23, and a visual detection classification interface 4. The processing device 2 performs quantitative calculation after receiving the line information and the panel scanning image information set. In detail, the quality of the solar panel S1 may be preliminarily determined through current and voltage parameters of a single string. Next, the impact on power generation efficiency is calculated based on conditions such as brightness, a defect area, and a shape of the EL panel image P11 of each solar panel S1. Further, a quantification score of each solar panel S1 is calculated to further generate the visual detection classification interface 4. In this embodiment, the artificial intelligence classification device 21 can obtain a classification determination method for a defect type through training based on brightness, an area, and a shape of a panel image, and can perform defect classification based on the panel defect result to obtain a plurality of defect category parameters, and present a classification result or parameter through the visual detection classification interface 4 (for example, through the panel status quantification information set of the visual detection classification interface 4). The map positioning tool 22 and the zoom function module 23 may also be executed through operation of the visual detection classification interface 4, and the operation manner thereof is described in detail in the following paragraphs.

The visual detection classification interface 4 of the present disclosure may be opened through a general web browser, so that a site manager can check the status of each solar power generation site at any time through the web browser in the electronic device. However, in another embodiment of the present disclosure, professional viewing software may also be designed, and details are not described herein. Referring to FIG. 2, FIG. 3, and FIG. 4, the visual detection classification interface 4 has a positioning option 41 (after clicking and selection, a map positioning tool 22 is enabled), a site code display block 42, a site environment map 43, a plurality of panel image layers 44, a plurality of panel region numbers 45, a plurality of panel numbers 451, a plurality of visual position markers 46, and a panel status quantification information set 47. The panel image layers 44, the panel region numbers 45, the panel numbers 451, the visual position markers 46, and the panel status quantification information set 47 are superimposed and displayed on the site environment map 43. Since each site occupies a large area, the site is first divided into a plurality of regions, panel regions are numbered, and then each solar panel S1 in each region is assigned a panel number 451. As shown in FIG. 4, a number 9_1 (20/1) is a panel region number 45 and a panel number 451 of one of the solar panels S1 in a site. Each square represents each solar panel S1 of the solar power generation module S. In this way, a region and an exact position where each solar panel S1 is located can be quickly known, so that a maintainer can quickly reach a target position and perform maintenance.

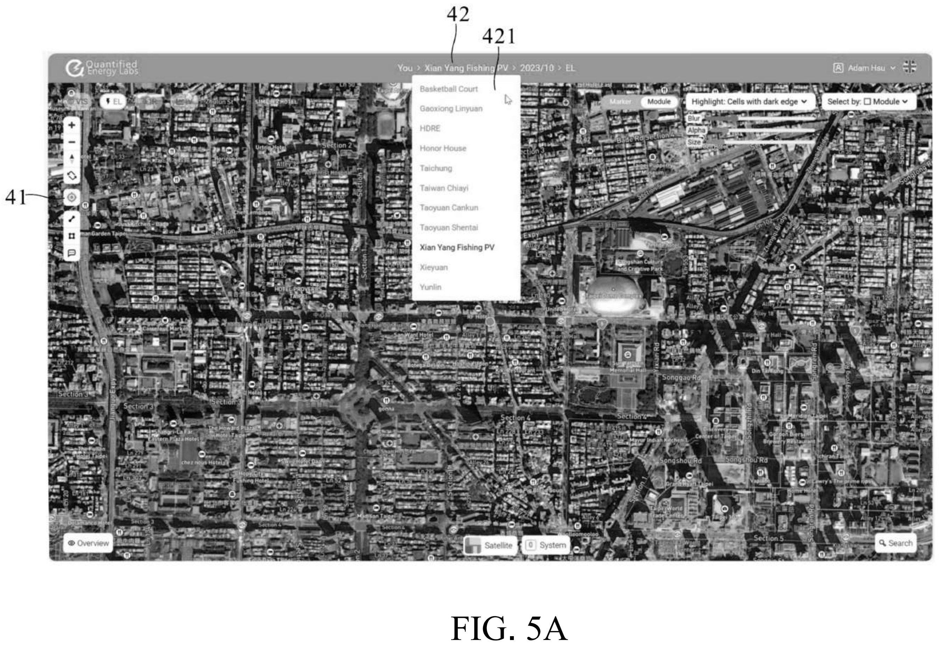

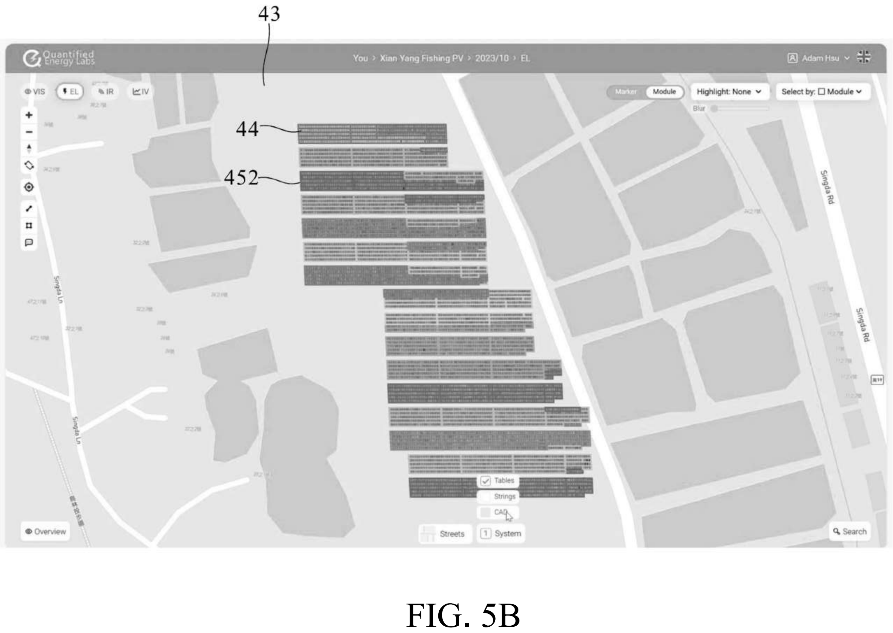

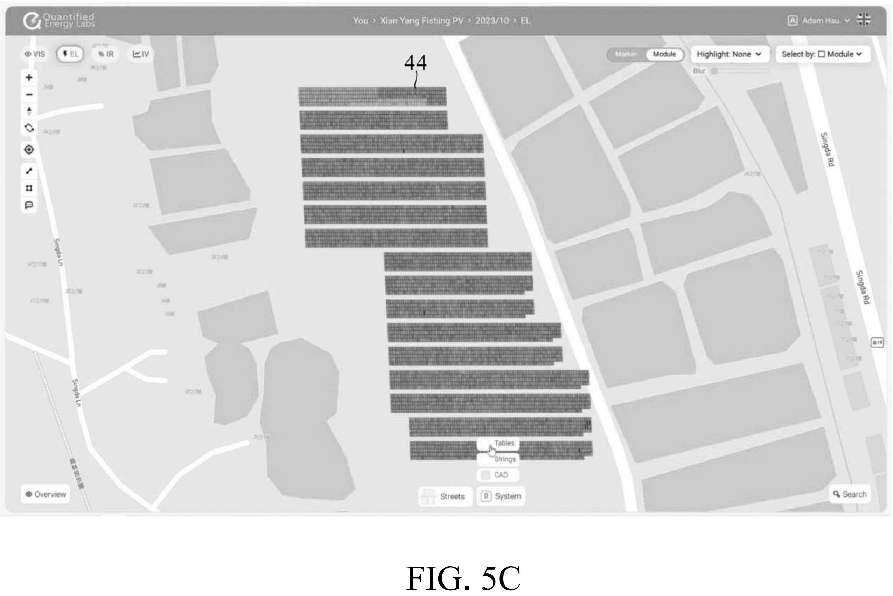

As shown in FIG. 5A, when a manager or a maintainer clicks and selects a site code display block 42, a site code list 421 of all solar power generation modules S can be listed. After a specific site is clicked and selected, a name of the specific site is displayed in the site code display block 42. When the positioning option 41 is clicked and selected, the map positioning tool 22 is enabled and extracts a position marker of the selected specific site and corresponding information onto an environmental map. If the environmental map is continually zoomed in, as shown in FIG. 5B, the visual detection classification interface 4 includes not only the site environment map 43 of the location of the solar power generation module S and the panel image layers 44 (such as the gray region in FIG. 5B), but also, in addition to the foregoing division by the panel region number 45, it may also cover each panel region with a region color 452 (such as the red, green, orange, blue, and pink color frames in FIG. 5B representing different region colors 452). If region color coverage is to be canceled, a table option in a system option may be unchecked, and then only the distribution of the solar panel S1 power generation module in the site environment map 43 is displayed as shown in FIG. 5C.

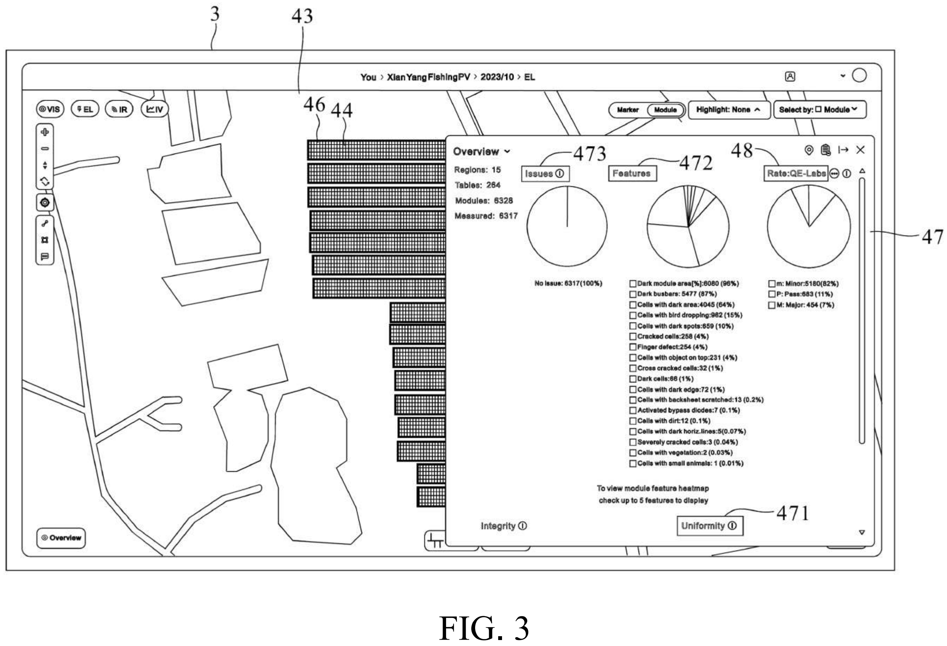

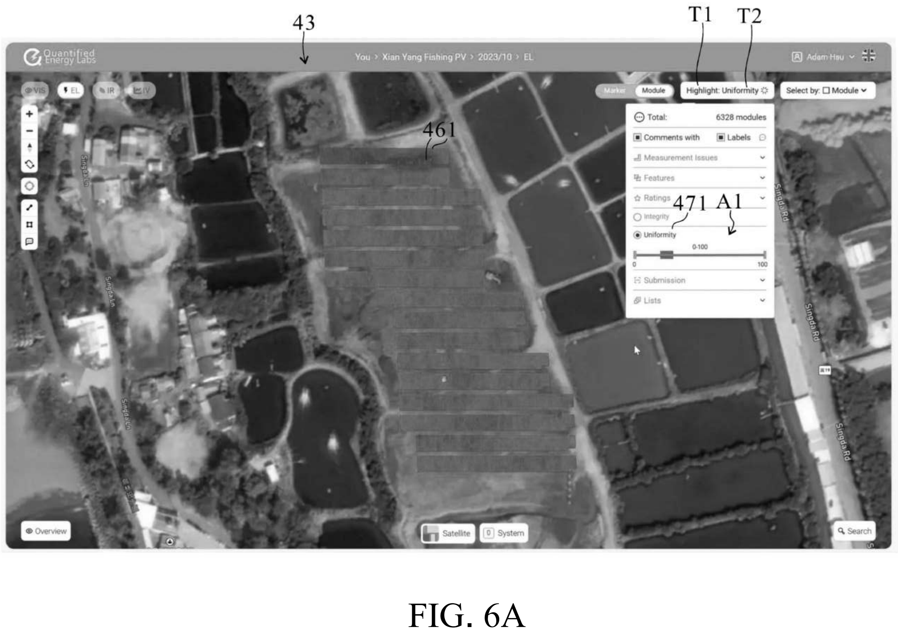

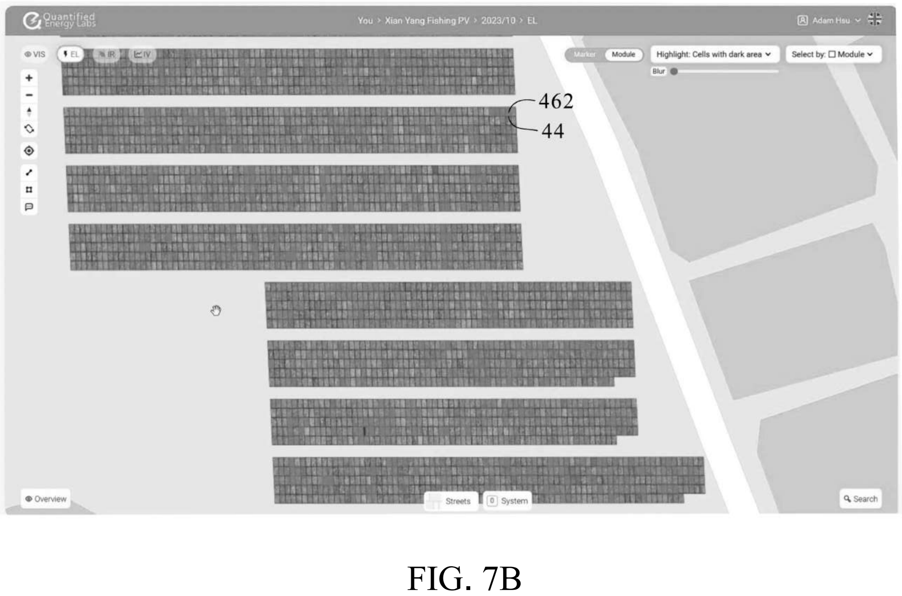

As described above, referring to FIG. 3, the panel status quantification information set 47 includes a panel uniformity rating indicator 471, defect category information 472 (obtained from the foregoing defect category parameters), a plurality of pieces of panel position information (not shown), a sensing success rate indicator 473, and a defect degree indicator 48. The visual position markers 46 are correspondingly superimposed on the panel image layers 44 based on the panel position information. The visual position markers 46 include at least the uniformity score color layer markers 461 and the defect color layer markers 462. The panel position information includes at least the uniformity position information and the defect position information. In other words, the uniformity score color layer markers 461 are superimposed on the corresponding panel image layer 44 based on each uniformity position information corresponding to a solar panel S1 (as shown in FIG. 6A). The defect color layer markers 462 are superimposed on the corresponding panel image layer 44 based on each defect position information corresponding to the solar panel S1 (as shown in FIG. 7B).

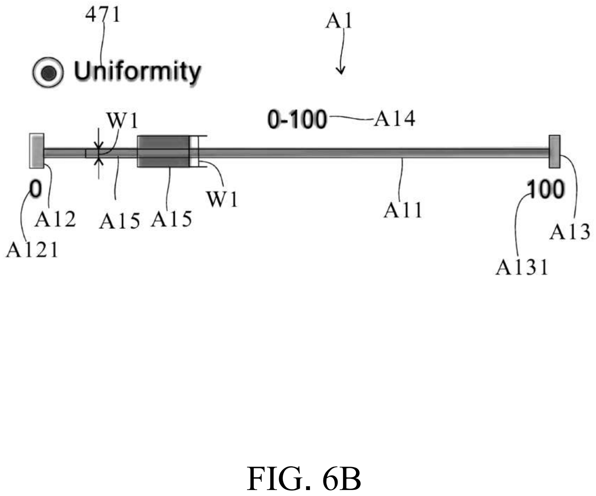

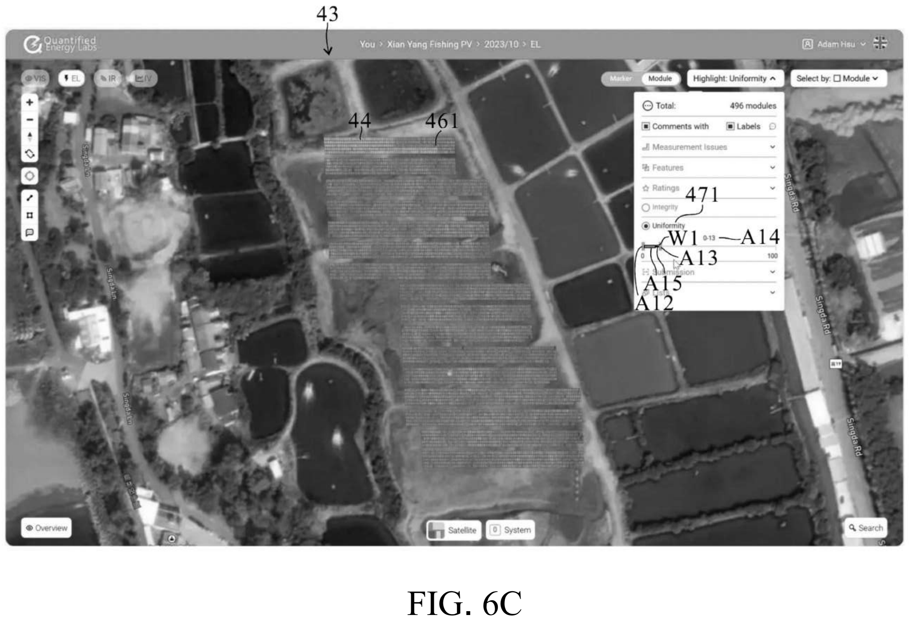

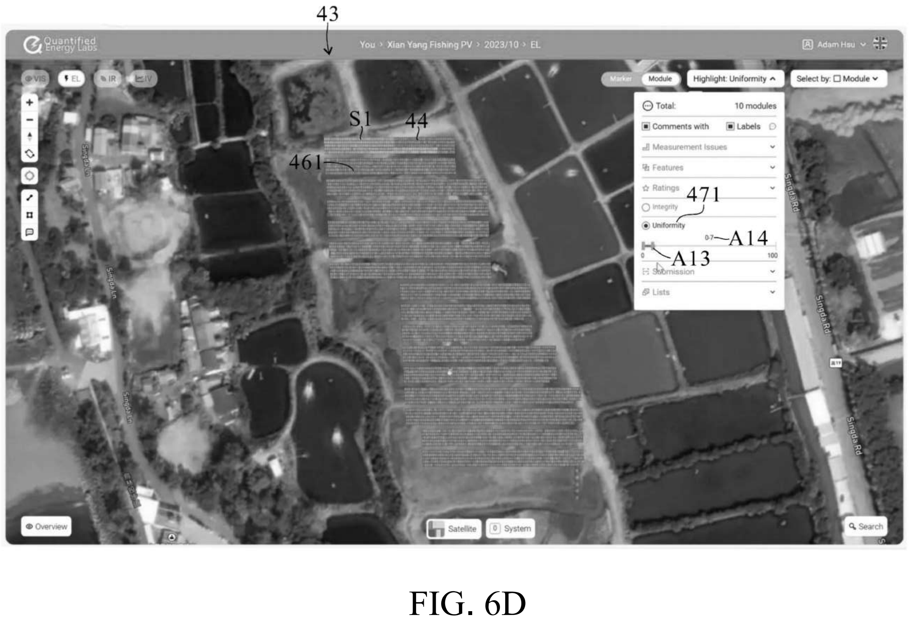

Specifically, as shown in FIG. 6A, a Highlight option T1 in an upper right corner of an interface is clicked and selected, and a Uniformity option T2 is selected, so that a panel uniformity rating indicator 471 of a site is correspondingly displayed. In this embodiment, the panel uniformity rating indicator 471 is displayed through a first visualization score rating chart A1. As shown in FIG. 6B, the first visualization score rating chart A1 has a uniformity score scale bar A11, a first main cursor A12, a second main cursor A13, a uniformity score scale display region A14, and a plurality of panel quantity layer display regions A15 (located on the uniformity score scale bar A11). The first main cursor A12 and the second main cursor A13 are movably arranged on the uniformity score scale bar A11. The uniformity score scale display region A14 is arranged adjacent to the uniformity score scale bar A11 to display a first uniformity score scale A121 corresponding to the first main cursor A12 and a second uniformity score scale A131 corresponding to the second main cursor A13. The panel quantity layer regions may be displayed between the first main cursor A12 and the second main cursor A13 and is located on the uniformity score scale bar A11. Brightness, a dark region shape, and a dark region area of an EL panel image P11 of a solar panel S1 are quantified into scores of 0-100. A higher score indicates better quality of the solar panel S1. As shown in FIG. 6B, the first main cursor A12 is located at the score scale 0, and the second main cursor A13 is located at the score scale 100. However, each score has the panel quantity layer display region A15 displayed thereon. A width W1 of each panel quantity layer display region A15 represents a ratio of a panel quantity corresponding to the score of each order. As shown in FIG. 6A, the uniformity score color layer markers 461 (red color frames) are superimposed on the corresponding panel image layers 44 based on the uniformity position information. For example, FIG. 5C shows only a panel image layer 44 of a solar panel S1. However, in FIG. 6A, a plurality of corresponding panel image layers 44 are further framed as the uniformity score color layer markers 461 through different color blocks such as red frames and green frames. Further, as shown in FIG. 6C, when the second main cursor A13 moves to a score 13, the uniformity score scale display region A14 displays that solar panels S1 with 0-13 scores may be superimposed on corresponding panel image layers 44 based on corresponding uniformity position information through uniformity score color layer markers 461 (represented by green frames). The panel quantity layer display region A15 is displayed by a certain width W1 between the first main cursor A12 and the second main cursor A13 (the width W1 is displayed based on a ratio of a quantity of solar panels S1 with scores of 0-13 to a total quantity). Similarly, as shown in FIG. 6D, when the second main cursor A13 moves to a score of 7, the uniformity score scale display region A14 displays scores 0-7, and the solar panels S1 with the scores of 0-7 may be further correspondingly adjusted and marked on the panel image layers 44 through the uniformity score color layer markers 461. In this way, a manager can calculate a quantity of solar panels S1 in each score interval, so that the manager can determine a quantity of solar panels S1 that needs to be repaired based on financial budget thereof. For example, if the budget is low, solar panels S1 with a uniformity score of 0-13 may be given the priority to repair.

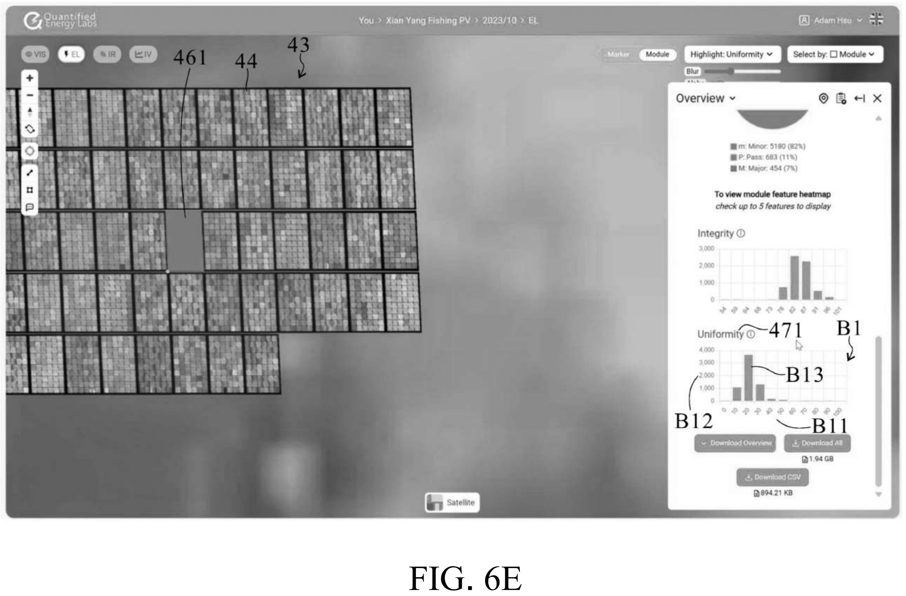

Referring to FIG. 6E, a panel uniformity rating indicator 471 of the present disclosure may be further displayed through a second visualization score rating chart B1. The second visualization score rating chart B1 is a bar chart and has a uniformity score horizontal axis scale B11, a panel quantity vertical axis scale B12, and a plurality of uniformity bar layers B13. Each of the uniformity bar layers B13 is configured to represent each panel quantity vertical axis scale B12 corresponding to each uniformity score horizontal axis scale B11. Similarly, after one of the uniformity bar layers B13 and the site environment map 43 are clicked and selected in sequence, the processing device 2 superimposes a plurality of uniformity score color layer markers 461 on a portion of the panel image layers 44 based on a plurality of pieces of corresponding uniformity position information, and displays the uniformity score color layer markers through the display device 3. The superposition effect is shown as the site environment map 43 in FIG. 6A, FIG. 6C, or FIG. 6D, and details are not described herein again.

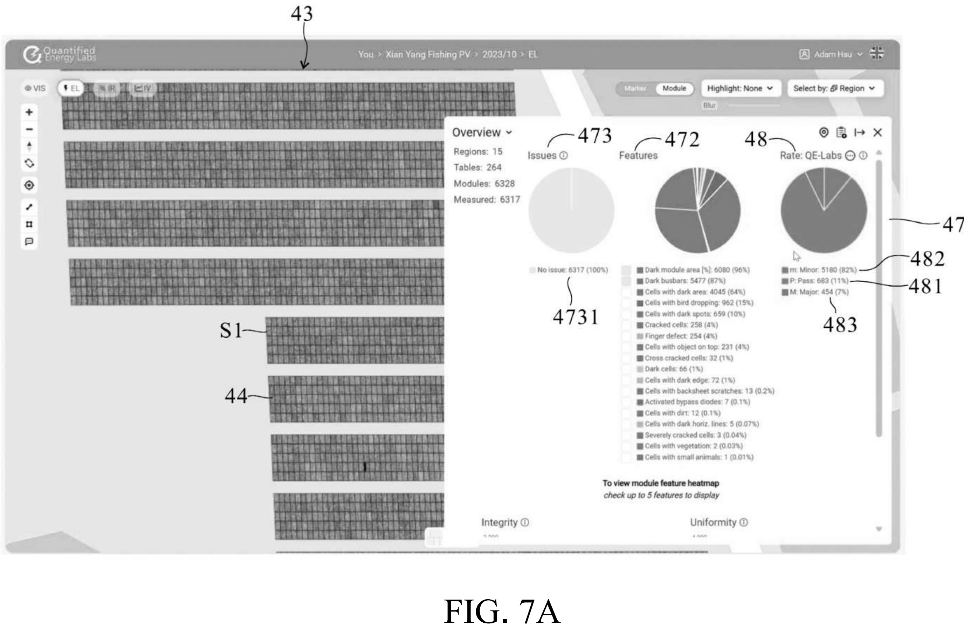

Referring to FIG. 2, after an overview option (an Overview option T3 in a lower left corner of the drawing) on the visual detection classification interface 4 is clicked and selected, the panel status quantification information set 47 is superimposed and displayed on the site environment map 43, as shown in FIG. 3 or FIG. 7A. The panel status quantification information set 47 includes a sensing success rate indicator 473, a defect degree indicator 48, a panel uniformity rating indicator 471, defect category information 472, and a plurality of pieces of panel position information 473 of a solar panel S1.

Still referring to FIG. 7A, in the solar sensing success rate indicator 473 (Issues shown in FIG. 7A), a sensing success rate parameter 4731, a sensing failure rate parameter (not shown), or a non-response rate parameter (not shown) is displayed through a sensing success rate pie chart. Therefore, a quantity of the solar panels S1 that are successfully connected to the detection and evaluation system 100 of the present disclosure is known, and the solar panel S1 that fails to be sensed or has no response may be repaired.

In the defect degree indicator 48 (Rate: QE-Labs shown in FIG. 7A), a non-defect ratio parameter 481, a minor defect ratio parameter 482, and a major defect ratio parameter 483 are displayed through a defect degree pie chart, so that a manager can quickly master defect conditions of all solar panels S1 in a site, and can perform subsequent maintenance for the solar panels S1 with major defects. It should be noted that when a region of the major defect ratio parameter 483 in the pie chart is clicked and selected and then the site environment map 43 is clicked and selected, a red marker (not shown) representing a major defect is correspondingly superimposed on a panel image layer 44 having a major defect, so that the manager can quickly know positions of seriously damaged solar panels S1, and details are not described herein again.

In the present disclosure, the defect category information 472 includes at least crack information (cracked cells), backsheet scratch information (cells with backsheet scratched), line short-circuit information (shunted cells), electrode finger defect information (finger defect), dirt defect information (cells with dirt, cells with bird dropping), dark shadow region information (dark cells), bright region information (cells with bright pockets), activated bypass diode information (activated bypass diode), dark matter bleed information (cells with dark bleed), on-panel foreign matter information (cells with object on top), panel edge shadow information (cells with dark edge), or may further include severe crack information (severely cracked cells), cross crack information (cross cracked cells), black spot condition information (cells with dark spots), shadow module region information (dark module area), wire fence portion shadow information (cells with dark area), or dark horizontal line information (cells with dark horizontal lines). As shown in FIG. 7A, the defect category information 472 is displayed as a defect percentage chart of each defect category information 472 in total defects through a defect category quantity pie chart, each defect classification block of each defect percentage chart is clicked and then the site environment map 43 is clicked, and each defect color layer marker 462 is correspondingly superimposed on the panel image layer 44 based on the panel defect result and the defect position information. If the wire fence portion shadow information (cells with dark area) is clicked and selected in FIG. 7A, the defect color layer marker 462 of the wire fence portion shadow information (cells with dark area) is correspondingly superimposed on the corresponding panel image layer 44 based on the defect position information thereof, as shown in FIG. 7B.

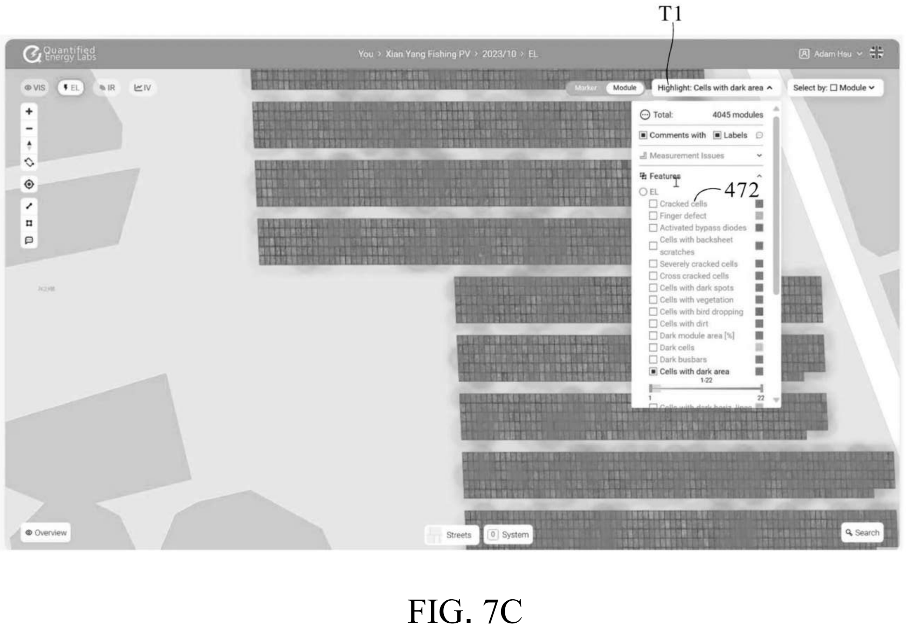

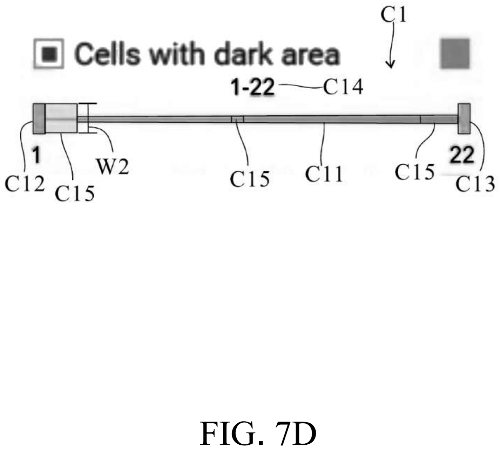

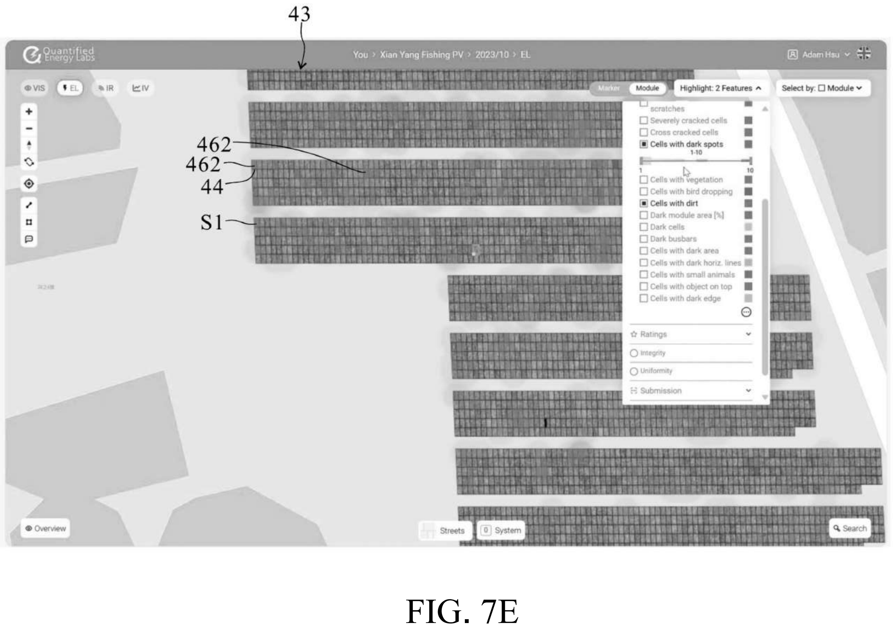

Referring to FIG. 7C, the defect category information 472 may also be selected through a Highlight option T1 in the upper right of an interface, so that each specific defect category information 472 can be correspondingly displayed. When each defect category information 472 is clicked and selected, each defect category information 472 has a defect rating indicator that may be displayed through a third visualization score rating chart C1. Referring to FIG. 7D, a wire fence portion shadow information (cells with dark area) is used as an example. Each third visualization score rating chart C1 has a defect score scale bar C11, a first sub-cursor C12, a second sub-cursor C13, a defect score scale display region C14, and a plurality of panel defect quantity layer regions C15 (in FIG. 7D, only three panel defect quantity layer regions C15 are shown for illustration, and actually, each score has a corresponding panel defect quantity layer region C15). The first sub-cursor C12 and the second sub-cursor C13 are movably arranged on the defect score scale bar C11. The defect score display region is arranged adjacent to the score scale bar to display a first sub-score scale corresponding to the first sub-cursor C12 and a second sub-score scale corresponding to the second sub-cursor C13. The panel defect quantity layer region C15 may be displayed between the first sub-cursor C12 and the second sub-cursor C13 and is located on the defect score scale bar C11. A panel defect quantity layer region C15 for each score scale has a width W2. A numerical value of the width is obtained from a ratio of a quantity of defects of the solar panels having the score to a total quantity of solar panels. Referring to FIG. 7E, if dirt defect information (cells with dirt) and black spot condition information (cells with dark spots) are selected simultaneously, specific defect color layer markers 462 related to the dirt defect information (cells with dirt) and the black spot condition information (cells with dark spots) are simultaneously used in a map and superimposed on a panel image layer 44 at a corresponding position based on corresponding defect position information, so that a manager can quickly know the overall position of the solar panel S1 corresponding to each defect classification information.

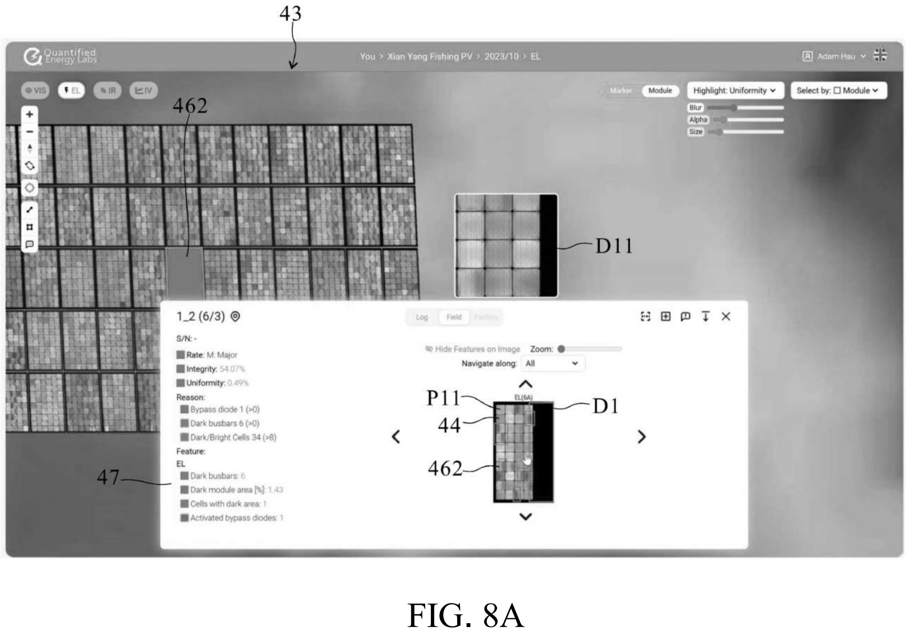

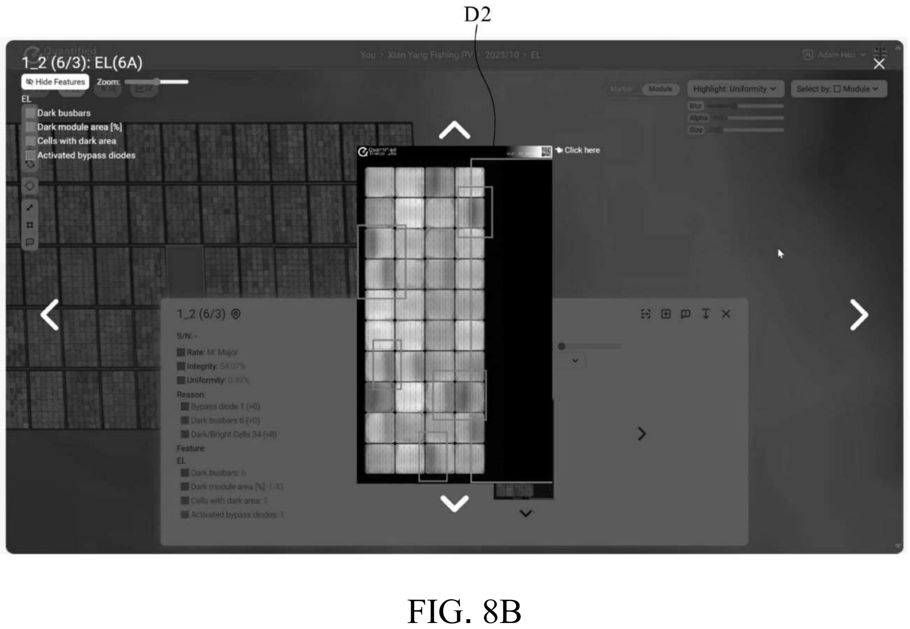

Referring to FIG. 8A, when one of defect color layer markers 462 located in the site environment map 43 is clicked and selected, the superimposed panel image layers 44 are displayed through a first magnified state layer D1. When a cursor moves on the D1, image details of the panel image layer 44 may be further displayed through an auxiliary magnified image at a higher magnification in a sub-magnification state layer D11, and the panel status quantification information set is displayed on the display device 3. As shown in FIG. 8B, if the first magnified state layer D1 is further clicked and selected, a second magnified state layer D2 is further displayed, and each defect color layer marker 462 is superimposed on the second magnified state layer D2. The manager can directly view an EL panel image P11 of each solar panel S1 (the panel image layer 44 includes a plurality of EL panel images P11) by inspecting the first magnified state layer D1 and the second magnified state layer D2, to help understand the condition of the solar panel S1 in an actual site.

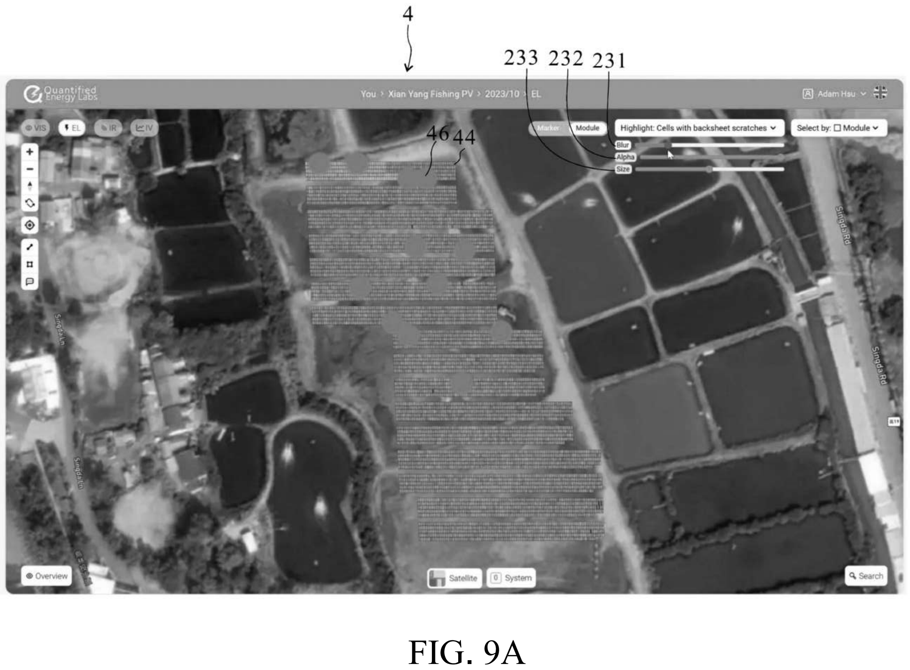

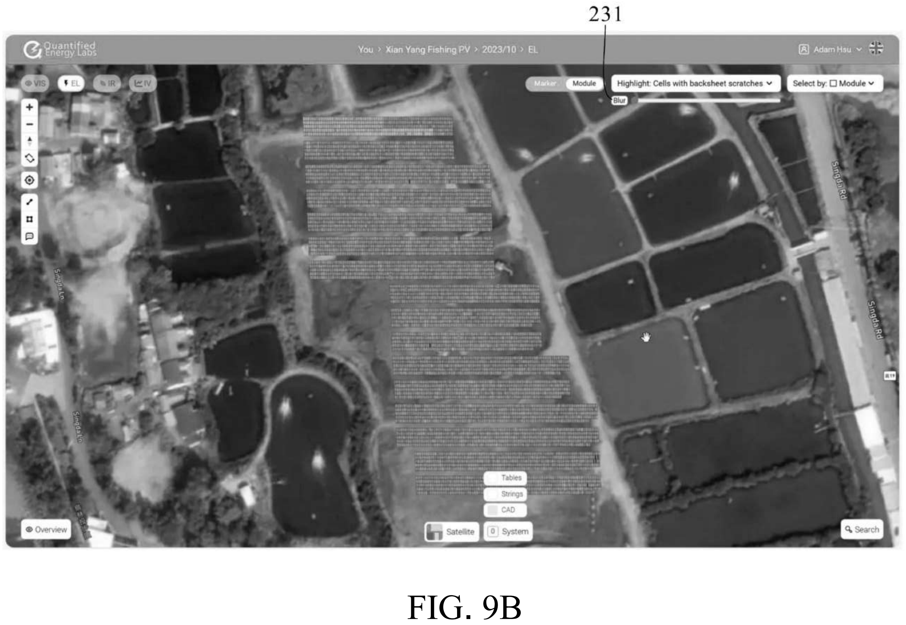

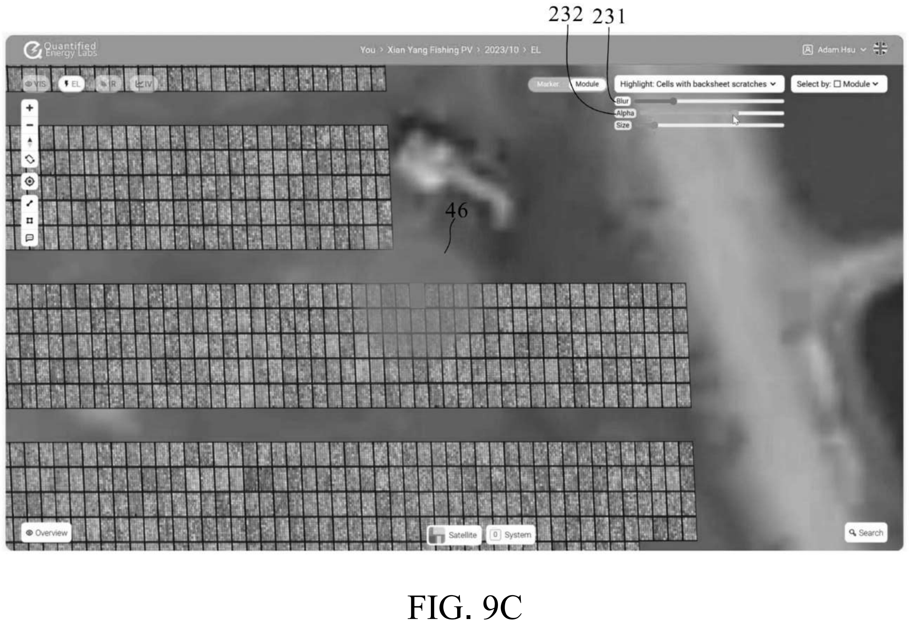

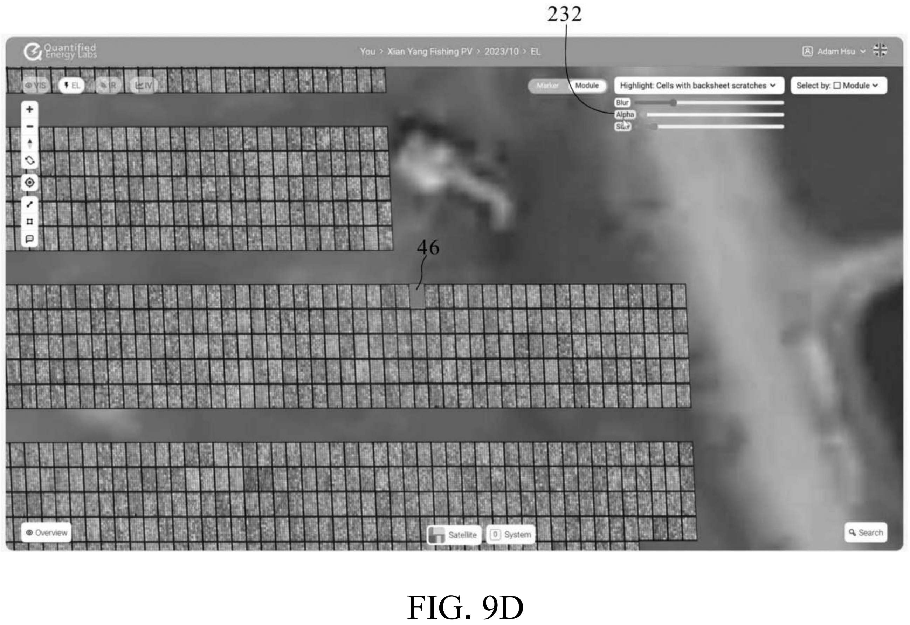

In addition, a zoom function module 23 of a processing device 2 may be further connected to a visual detection classification interface 4. As shown in FIG. 9A, the zoom function module 23 is divided, at an upper right corner of the visual detection classification interface 4, into a Blur adjustment block 231, an Alpha adjustment block 232, and a Size adjustment block 233. A marker area of a visual position marker 46 superimposed on the panel image layer 44 may be first adjusted through the Blur adjustment block 231. As shown in FIG. 9B, if an indicator of the Blur adjustment block 231 is set to 0, no any visual position marker 46 is displayed. Referring to FIG. 9C and FIG. 9D, through adjustment of a numerical value of the Alpha adjustment block 232, a color block gradation degree of the visual position marker 46 may be adjusted, and the Size adjustment block 233 is used to adjust a size of the visual position marker 46. A zoom area of the visual position marker 46 is controlled through the zoom function module, so that the manager can quickly find a specific solar panel S1that needs to be repaired from the numerous solar panels S1, thereby improving maintenance efficiency.

Based on the above, through the detection and evaluation system for a solar power generation module provided in the present disclosure, all information of all sites may be stored, a location of each site can be marked on a map, a state of each solar panel on each site can be visually displayed through an image and superimposed on the map through quantitative calculation, so as to quickly know a position and various quantitative information (including line information, defect conditions, and the like) of each solar panel. In addition, through the detection and evaluation system of the present disclosure, all quantized data can be integrated, and then a position and a damage cause of a solar panel that needs to be repaired are marked based on conditions set by a user, so as to quickly reach a specific solar panel and perform a correct maintenance procedure, thereby reducing maintenance operation costs and improving overall power generation efficiency of the site.

The present disclosure has been described in detail above. However, the foregoing content is only a preferred embodiment of the present disclosure, and cannot be used to limit the scope of implementation of the present disclosure. In other words, all equal changes and modifications made within the patent scope of the present disclosure shall still fall within the scope of the patent of the present disclosure.

## Claims

1. A detection and evaluation system (100) for a solar power generation module (S), comprising:
a sensing device (1), configured to detect a plurality of solar panels (S1) of the solar power generation module (S), to obtain a line information set and a panel image capture information set of each of the solar panels (S1);
a processing device (2), coupled to the sensing device (1), and configured to evaluate a panel defect result of each solar panel (S1) based on the line information set and a panel scanning image capture information set, and generate a plurality of visual detection classification interfaces (4) based on the panel defect result, the line information set, and a panel scanning image information set; and
a display device (3), coupled to the processing device (2), and configured to display the visual detection classification interfaces (4).

2. The detection and evaluation system (100) for a solar power generation module (S) according to claim 1, wherein the visual detection classification interfaces (4) comprise a site environment map (43), a plurality of panel image layers (44), and a panel status quantification information set (47), and the panel image layers (44) and the panel status quantification information set (47) are superimposed and displayed on the site environment map (43).

3. The detection and evaluation system (100) for a solar power generation module (S) according to claim 2, wherein the panel status quantification information set (47) comprises a panel uniformity rating indicator (471), the panel uniformity rating indicator (471) is displayed through a first visualization score rating chart (A1), the first visualization score rating chart (A1) has a uniformity score scale bar (A11), a first main cursor (A12), a second main cursor (A13), a uniformity score scale display region (A14), and a plurality of panel quantity layer display regions (A15), the first main cursor (A12) and the second main cursor (A13) are movably arranged on the uniformity score scale bar (A11), the uniformity score scale display region (A14) is arranged adjacent to the uniformity score scale bar (A11) to display a first uniformity score scale (A121) corresponding to the first main cursor (A12) and a second uniformity score scale (A131) corresponding to the second main cursor (A13), and a panel quantity layer region is displayed between the first main cursor (A12) and the second main cursor (A13) and is located on the uniformity score scale bar (A11).

4. The detection and evaluation system (100) for a solar power generation module (S) according to claim 3, wherein the panel uniformity rating indicator (471) is displayed through a second visualization score rating chart (B1), the second visualization score rating chart (B1) is a bar chart having a uniformity score horizontal axis scale (B11), a panel quantity vertical axis scale (B12), and a plurality of uniformity bar layers (B13), and each of the uniformity bar layers (B13) is configured to represent each panel quantity vertical axis scale (B12) corresponding to each uniformity score horizontal axis scale (B11).

5. The detection and evaluation system (100) for a solar power generation module (S) according to claim 4, wherein after one of the uniformity bar layers (B13) and the site environment map (43) are clicked and selected in sequence, the processing device (2) superimposes a plurality of uniformity score color layer markers (461) on a portion of the panel image layers (44) based on a plurality of pieces of corresponding uniformity position information, and displays the uniformity score color layer markers (461) through the display device (3).

6. The detection and evaluation system (100) for a solar power generation module (S) according to claim 5, wherein the panel status quantification information set (47) comprises a plurality of defect color layer markers (462), a plurality of pieces of defect category information (472), and a plurality of pieces of defect position information, each of the defect color layer markers (462) correspondingly represents each of the defect category information (472), and each defect color layer marker (462) is selectively superimposed on the panel image layers (44) based on the defect position information.

7. The detection and evaluation system (100) for a solar power generation module (S) according to claim 6, wherein each defect category information (472) has a defect rating indicator that is displayed through a third visualization score rating chart (C1), the third visualization score rating chart (C1) has a defect score scale bar (C11), a first sub-cursor (C12), a second sub-cursor (C13), a defect score scale display region (C14), and a plurality of panel defect quantity layer regions (C15), the first sub-cursor (C12) and the second sub-cursor (C13) are movably arranged on the defect score scale bar (C11), a defect score display region is arranged adjacent to the score scale bar to display a first sub-score scale corresponding to the first sub-cursor (C12) and a second sub-score scale corresponding to the second sub-cursor (C13), and the panel defect quantity layer regions (C15) are displayed between the first sub-cursor (C12) and the second sub-cursor (C13) and are located on the defect score scale bar (C11).

8. The detection and evaluation system (100) for a solar power generation module (S) according to claim 6, wherein each defect color layer marker (462) located in the site environment map (43) is clicked and selected, each of the panel image layers (44) on which the defect color layer marker (462) is superimposed is displayed on the display device (3) as a first magnified state layer (D1), and the panel status quantification information set (47) is displayed on the display device (3).

9. The detection and evaluation system (100) for a solar power generation module (S) according to claim 8, wherein after the first magnified state layer (D1) is clicked and selected, a second magnified state layer (D2) is further displayed on the display device (3), and each defect color layer marker (462) is superimposed on the second magnified state layer (D2).

10. The detection and evaluation system (100) for a solar power generation module (S) according to claim 6, wherein the defect category information (472) comprises crack information, backsheet scratch information, line short-circuit information, electrode finger defect information, dirt defect information, dark shadow region information, bright region information, activated bypass diode information, dark matter bleed information, on-panel foreign matter information, and panel edge shadow information.

11. The detection and evaluation system (100) for a solar power generation module (S) according to claim 6, wherein the defect category information (472) is displayed as a defect percentage chart of each defect category information (472) in total defects through a defect category quantity pie chart, each defect classification interface of each defect percentage chart is clicked and then the site environment map (43) is clicked, and each defect color layer marker (462) is correspondingly superimposed on the panel image layer (44) based on the panel defect result and the defect position information.

12. The detection and evaluation system (100) for a solar power generation module (S) according to claim 4, wherein the line information set comprises a current and voltage measurement parameter.

13. The detection and evaluation system (100) for a solar power generation module (S) according to claim 2, wherein the panel status quantification information set (47) further comprises a solar panel sensing success rate indicator, and a sensing success rate parameter (4731), a sensing failure rate parameter, and a non-response rate parameter are displayed in a sensing success rate pie chart.

14. The detection and evaluation system (100) for a solar power generation module (S) according to claim 2, wherein the panel status quantification information set (47) further comprises a defect degree indicator (48), and a non-defect ratio parameter (481), a minor defect ratio parameter (482), and a major defect ratio parameter (483) are displayed in a defect degree pie chart.

15. The detection and evaluation system (100) for a solar power generation module (S) according to claim 2, wherein the processing device (2) comprises a map positioning tool (22) for extracting the site environment map (43) of a position of the solar power generation module (S), the panel image layers (44), and the panel status quantification information set (47).

16. The detection and evaluation system (100) for a solar power generation module (S) according to claim 2, wherein the visual detection classification interfaces (4) further comprise a plurality of pieces of panel region number information and a plurality of pieces of panel number information, and each of the plurality of pieces of panel region information and each of the panel number information are visually superimposed and displayed on the site environment map (43).

17. The detection and evaluation system (100) for a solar power generation module (S) according to claim 6, wherein the visual detection classification interfaces (4) have a plurality of visual position markers (46), the visual position markers (46) are correspondingly superimposed on the panel image layers (44) based on a plurality of pieces of panel position information in the panel status quantification information set (47), the visual position markers (46) comprise at least the uniformity score color layer markers (461) and the defect color layer markers (462), and the panel position information comprises at least the uniformity position information and the defect position information.

18. The detection and evaluation system (100) for a solar power generation module (S) according to claim 17, wherein the processing device (2) has a zoom function module (23) to adjust a marker area of each of the visual position markers (46) superimposed on the panel image layers (44).

19. The detection and evaluation system (100) for a solar power generation module (S) according to claim 6, wherein the processing device (2) has an artificial intelligence classification device (21) to classify defects based on the panel defect result and obtain the defect category information (472).
